# EUROPEAN PATENT SPECIFICATION

(11) **EP 4 431 201 B1**
(45) Date of publication and mention of the grant of the patent: **06.05.2026**
(21) Application number: 22910634.9
(22) Date of filing: 08.11.2022
(51) Int. Cl.: B21D 22/20, B21D 22/00, B30B 15/26, G01B 11/24, G06F 30/10, G06F 30/15, G06F 30/17, G06F 30/23, G06F 113/22, G06F 113/24, B21D 22/26

(54) **PRESS FORMING ANALYSIS METHOD, PRESS FORMING ANALYSIS APPARATUS, AND PRESS FORMING ANALYSIS PROGRAM**
PRESSFORMUNGSANALYSEVERFAHREN, PRESSFORMUNGSANALYSEVORRICHTUNG UND PRESSFORMUNGSANALYSEPROGRAMM
PROCÉDÉ D'ANALYSE DU FORMAGE À LA PRESSE, DISPOSITIF D'ANALYSE DU FORMAGE À LA PRESSE ET PROGRAMME D'ANALYSE DU FORMAGE À LA PRESSE

(30) Priority: 21.12.2021 JP 2021206628; 16.02.2022 JP 2022021758
(43) Date of publication of application: 18.09.2024
(73) Proprietor: JFE Steel Corporation, Tokyo 100-0011 (JP)
(72) Inventor: OGAWA, Takeshi, Tokyo 100-0011 (JP); SUMIKAWA, Satoshi, Tokyo 100-0011 (JP); YAMASAKI, Yuji, Tokyo 100-0011 (JP); SHINMIYA, Toyohisa, Tokyo 100-0011 (JP)
(74) Representative: Hoffmann Eitle
(86) International application number: PCT/JP2022/041512
(87) International publication number: WO 2023/119915

(56) References cited:
- EP-A1- 3 919 197
- JP-B1- 6 683 269
- JP-B2- 4 052 211
- JP-B2- 4 418 452
- JP-B2- 6 314 626
- vol. 18, 1 March 2013, article AKINOBU ISHIWATARI ET AL: "Press Forming Analysis Contributing to the Expansion of High Strength Steel Sheet Applications", pages: 96 - 102, XP055235424
- YOSHIDA TOHRU ET AL: "Shape Control Techniques for High Strength Steel in Sheet Metal Forming", 1 July 2003 (2003-07-01), pages 1 - 6, XP093235257, Retrieved from the Internet <URL:https://www.nipponsteel.com/en/tech/report/nsc/pdf/n8807.pdf> [retrieved on 20250204]

## Description

### Field

The present invention relates to a press forming analysis method, a press forming analysis apparatus, and a press forming analysis program for predicting an influence of a shape variation of a blank taken from a metal sheet having the shape variation in a case where press forming is performed by using the blank.

### Background

In the progress of improvement of collision safety of an automotive body due to tightening of an automobile collision safety standard, weight reduction of automotive body is also required in order to achieve improvement of fuel efficiency of an automobile in response to recent carbon dioxide emission regulations. In order to achieve both the collision safety performance and the weight reduction of automotive body, a growing number of metal sheets having higher strength than before are adopted in automotive bodies.

An actual metal sheet from which a blank for obtaining a press formed part is taken has not been completely flat, but has a waveform (shape variation). Therefore, an actual blank taken from the metal sheet is not necessarily flat, and may have a shape variation.

When a metal sheet having such a waveform is used as a blank and press-formed into an automotive part, the press formed part obtained after the press forming may deviate from targeted dimensional accuracy due to the shape variation.

For example, Patent Literatures 1 and 2 are disclosed as techniques for selecting a press formed part deviating from the targeted dimensional accuracy.

### Citation List

### Patent Literature

Patent Literature 1: JP S62-047504 A
Patent Literature 2: JP 2019-002834 A

### Summary

### Technical Problem

The techniques disclosed in Patent Literature 1 or 2 compares the shapes of the press formed parts after press forming with each other, and cannot predict an influence of the shape variation of a blank before the press forming on the press formed parts after the press forming. The influence of the shape variation of a blank on the shape of a press formed part has not been predicted. Furthermore, a portion of the press formed part susceptible to the influence of the shape variation of the blank has not been identified. In addition, EP 3 919 197 A1 discloses a method for press forming analysis of a shape variation of a blank taken from a metal sheet; this known method generates a first shape having a same shape as an actual press formed part based on measurement data obtained by measuring a shape after die release of the actual press formed part, the actual press formed part being obtained from an actual blank taken from the metal sheet having the shape variation.

The present invention has been made to solve the above-described problems, and an object thereof is to provide a press forming analysis method, a press forming analysis apparatus, and a press forming analysis program for predicting an influence of a shape variation of a blank taken from a metal sheet having the shape variation in a case where press forming is performed by using the blank.

### Solution to Problem

A press forming analysis method according to the present invention predicts an influence of a shape variation of a blank taken from a metal sheet having the shape variation in a case where press forming is performed by using the blank, and includes: a first shape generation step of generating a first shape having a same shape as an actual press formed part based on measurement data obtained by measuring a shape after die release of the actual press formed part, the actual press formed part being press-formed with a predetermined tool of press forming by using an actual blank taken from the metal sheet having the shape variation; a second shape acquisition step of acquiring a shape of a press formed part after die release as a second shape by performing press forming analysis in a case where press forming is performed with a tool-of-press-forming model having a same shape as the predetermined tool of press forming by using a flat blank model having a flat shape; and a deviation amount acquisition step of determining a portion where both the shapes deviate from each other and a deviation amount by comparing the second shape and the first shape with each other.

In the deviation amount acquisition step, a bottom dead center shape in press forming analysis using the flat blank model may be determined as a standard, and a difference between a difference from the first shape corresponding to a predetermined position of the bottom dead center shape and a difference from the second shape corresponding to the predetermined position of the bottom dead center shape may be acquired as the deviation amount.

In the deviation amount acquisition step, a forming surface shape of the tool-of-press-forming model may be determined as a standard, and a difference between a difference from the first shape corresponding to a predetermined position of the forming surface shape and a difference from the second shape corresponding to the predetermined position of the forming surface shape may be acquired as the deviation amount.

The press forming analysis method may further include an identification step of identifying a portion where the deviation amount exceeds a preset threshold as a portion requiring a countermeasure.

A press forming analysis apparatus according to the present invention predicts an influence of a shape variation of a blank taken from a metal sheet having the shape variation in a case where press forming is performed by using the blank, and includes: a first shape generation unit configured to generate a first shape having a same shape as an actual press formed part based on measurement data obtained by measuring a shape after die release of the actual press formed part, which has been press-formed with a predetermined tool of press forming by using an actual blank taken from the metal sheet having the shape variation; a second shape acquisition unit configured to acquire a shape of a press formed part after die release as a second shape by performing press forming analysis in a case where press forming is performed with a tool-of-press-forming model having a same shape as the predetermined tool of press forming by using a flat blank model having a flat shape; and a deviation amount acquisition unit configured to determine a portion where both the shapes deviate from each other and a deviation amount by comparing the second shape and the first shape with each other.

The deviation amount acquisition unit may be configured to determine a bottom dead center shape in press forming analysis using the flat blank model as a standard, and acquire, as the deviation amount, a difference between a difference from the first shape corresponding to a predetermined position of the bottom dead center shape and a difference from the second shape corresponding to the predetermined position of the bottom dead center shape.

The deviation amount acquisition unit may be configured to determine a forming surface shape of the tool-of-press-forming model as a standard, and acquire, as the deviation amount, a difference between a difference from the first shape corresponding to a predetermined position of the forming surface shape and a difference from the second shape corresponding to the predetermined position of the forming surface shape.

The press forming analysis apparatus may further include an identification unit configured to identify a portion where the deviation amount exceeds a preset threshold as a portion requiring a countermeasure.

A press forming analysis program according to the present invention causes a computer to function as the press forming analysis apparatus according to the present invention.

### Advantageous Effects of Invention

According to the present invention, it is possible to know an influence of the shape variation in a blank on the shape of the press formed part after springback, that is, a deviation amount caused by a greatly influenced portion and the shape variation. Furthermore, the quality of a blank can be predicted by determining the quality of a press formed part based on the deviation amount and a predetermined threshold. This enables grasp of a limit of the shape accuracy of the blank which falls within a shape accuracy required for the press formed part. Stable press forming can be performed by selecting a blank having an appropriate shape. Furthermore, when a shape defect of a press formed part occurs, a portion causing the shape defect of a blank before press forming can be identified, and countermeasures therefor can be immediately taken, which leads to improvement of productivity.

### Brief Description of Drawings

FIG. 1 is an explanatory diagram of respective steps of a press forming analysis method according to a first embodiment.
FIG. 2 is an external view of a part targeted in the first embodiment.
FIG. 3 is an explanatory diagram of an actual blank having an uneven shape used in the first embodiment, FIG. 3(a) is obtained by measuring the shape of the actual blank and expressing the unevenness by shade of color, and FIG. 3(b) graphically illustrates an amount of unevenness when viewed from an arrow A-A in a cross section indicated by a broken line in FIG. 3(a).
FIG. 4 illustrates an amount of difference between a first shape and a press forming bottom dead center shape.
FIG. 5 is an explanatory diagram of a flat blank model used in the first embodiment.
FIG. 6 illustrates an amount of difference between a second shape and the press forming bottom dead center shape.
FIG. 7 illustrates a deviation amount, which is a difference between an amount of difference between the first shape and the bottom dead center shape and an amount of difference between the second shape and the bottom dead center shape.
FIG. 8 is an explanatory diagram of a press forming analysis apparatus according to a second embodiment.
FIG. 9 is an explanatory diagram of an amount (a) of difference between the second shape subjected to press forming analysis using a flat blank model and the bottom dead center shape and an amount (b) of difference between the first shape generated based on the shape of an actual press formed part press-formed by using an actual blank and the bottom dead center shape in an example.
FIG. 10 illustrates a deviation amount, which is a difference between an amount of difference between the first shape and the bottom dead center shape and an amount of difference between the second shape and the bottom dead center shape in the example.

### Description of Embodiments

### [First Embodiment]

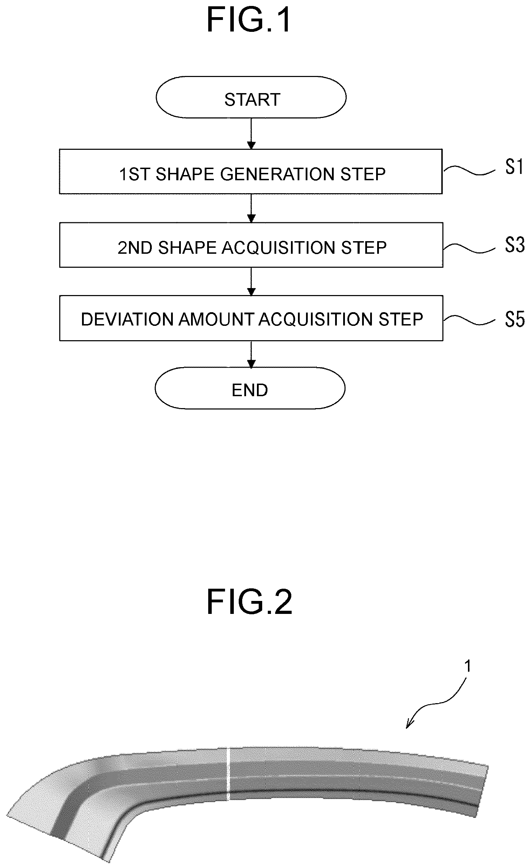

A press forming analysis method according to a present embodiment is used for predicting an influence of a shape variation of a blank in a case where press forming (e.g., crash forming and deep drawing) is performed by using a blank taken from a metal sheet having the shape variation (unevenness). As illustrated in FIG. 1, the press forming analysis method according to the embodiment includes a first shape generation step S1, a second shape acquisition step S3, and a deviation amount acquisition step S5. The first shape generation step S1 is a shape generation step of actual press-formed part. The second shape acquisition step S3 is a shape acquisition step of press-formed part using flat blank. Each configuration will be described in detail below by citing, as an example, a case where press forming is performed with a press formed part 1 in FIG. 2 as a target shape. Although, in the embodiment, a blank of a 1.5 GPa-class steel sheet having a sheet thickness of 1.2 mm is used, this is not a limitation.

### <first Shape Generation Step>

In the first shape generation step S1, a first shape having the same shape as an actual press formed part is generated based on the actual press formed part press-formed by using an actual blank taken from a metal sheet having a shape variation.

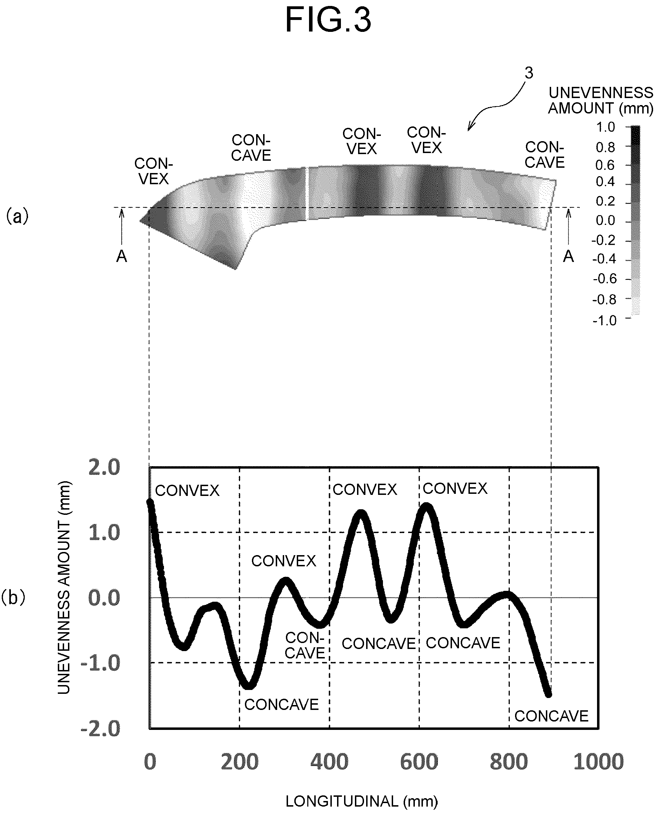

First, the actual blank taken from a metal sheet having a shape variation will be described. In one example, FIG. 3 illustrates an actual blank 3 sheared from a 1.5 GPa-class steel sheet having a shape variation and a sheet thickness of 1.2 mm. FIG. 3(a) is obtained by measuring the shape of the actual blank 3 and expressing the unevenness by shade of color. Furthermore, FIG. 3(b) graphically illustrates an unevenness amount when a cross section indicated by a broken line in FIG. 3(a) is viewed from an arrow A-A. A median of the unevenness is set as zero. As illustrated in FIG. 3(b), the actual blank 3 has an irregular uneven shape having a maximum unevenness amount of ±1.3 mm.

In the first shape generation step S1, the first shape having the same shape as an actual press formed part press-formed by using the above-described actual blank 3 is generated. For example, the actual blank 3 in FIG. 3 is press-formed by using a predetermined tool of press forming. The shape of the resulting actual press formed part after die release is measured by using a 3D shape measuring instrument including a laser rangefinder and the like. The first shape is generated based on measurement data obtained by the measurement. Both crash forming and deep drawing may be adopted for forming the actual press formed part. In the embodiment, description will be given by citing the deep drawing as an example. In an example to be described later, description will be given by citing the crash forming as an example.

In the above description, a case where a series of processes is implemented has been described. The series of processes includes the press forming of the actual blank 3, the measurement of the actual press formed part, and the generation of the first shape. When a press-formed actual press formed part is preliminarily prepared, the first shape may be generated by measuring the shape of the actual press formed part. When data obtained by measuring the shape of the actual press formed part is preliminarily prepared, the first shape may be generated based on the data.

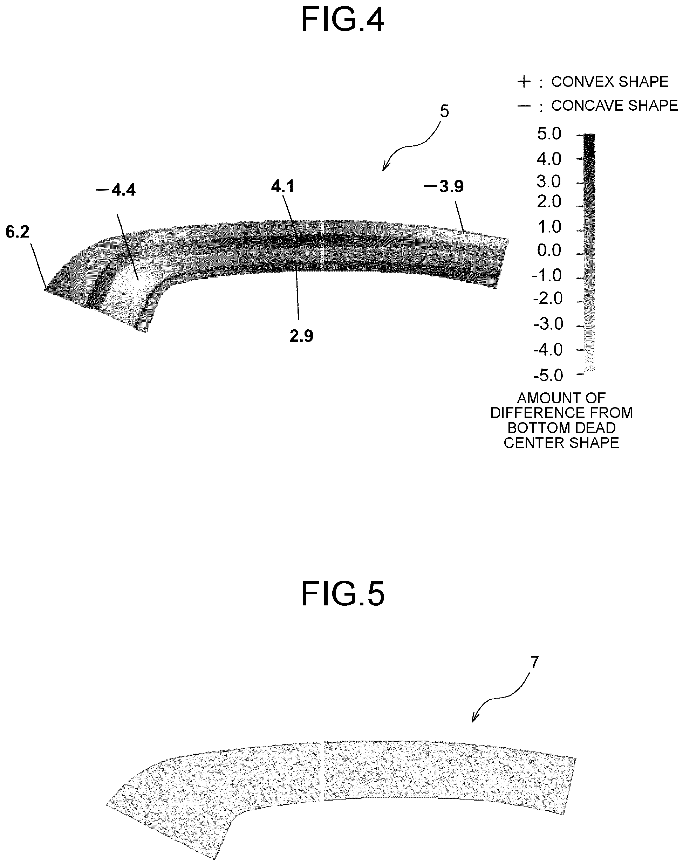

FIG. 4 illustrates an example of the first shape 5 generated as described above. In addition to the shape, FIG. 4 illustrates, by shade of color, an amount of difference from a bottom dead center shape in a case where press forming is performed by a tool-of-press-forming model. The bottom dead center shape can be determined by modeling the actual blank 3 and performing press forming analysis. The tool-of-press-forming model is obtained by modeling a tool of press forming used for forming the actual press formed part, and generated so as to have the same shape as a forming surface of an actual tool of press forming (not illustrated). Then, the amount of difference from the bottom dead center shape is a value obtained by subtracting the height of a corresponding portion of the bottom dead center shape from the height of each portion of the first shape in a press forming direction, and is a springback amount in the press forming direction. When a height difference (amount of difference) is plus (+), the first shape 5 has a more convex shape than the bottom dead center shape. When the height difference (amount of difference) is minus (-), the first shape 5 has a more concave shape than the bottom dead center shape.

In FIG. 4, color of a portion having a more concave shape than the bottom dead center shape is lightened, and color of a portion having a convex shape is darkened. Furthermore, numbers with + displayed in the figure denote an amount of difference in a convex direction, and those with - denote an amount of difference in a concave direction. Then, mm is used as a unit of the numbers. In the example, as illustrated in FIG. 4, the first shape 5 has an amount of difference of 6.2 mm at a left end of a flange portion, -4.4 mm at a top portion of a curved position. In a center portion in a longitudinal direction, the first shape 5 has an amount of difference of 4.1 mm at a side wall portion and 2.9 mm at the flange portion. The first shape 5 has an amount of difference of -3.9 mm at the flange portion near a right end.

### <second Shape Acquisition Step>

In the second shape acquisition step S3, as illustrated in FIG. 5, press forming analysis in a case where press forming is performed with the above-described tool-of-press-forming model by using a flat blank model (hereinafter, referred to as "flat blank model 7") is performed, and a shape of a press formed part after die release is acquired as a second shape.

The flat blank model 7 has been commonly used in press forming analysis, and has a flat shape without unevenness.

In the press forming analysis, CAE analysis such as a finite element method (FEM) is usually performed. The actual press formed part of the embodiment is obtained by the deep drawing as described above, and CAE analysis is performed on the premise of deep drawing in press forming analysis.

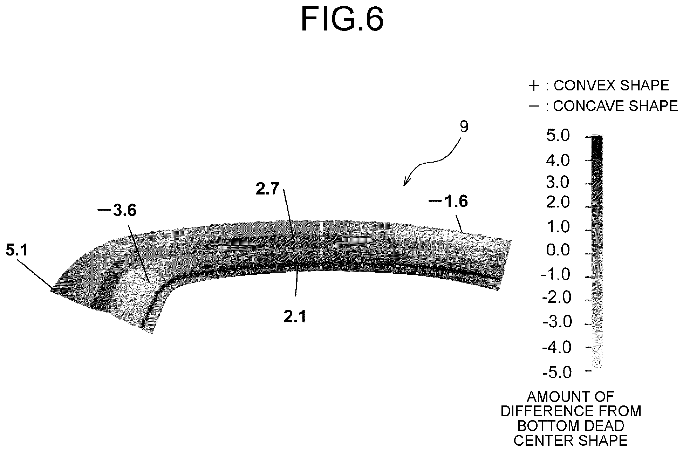

FIG. 6 illustrates a second shape 9 after die release by press forming analysis. As in FIG. 4, color and numerical values in FIG. 6 indicate an amount of difference from the bottom dead center shape. Even if press forming analysis is performed on the flat blank model 7 instead of the above-described modeled actual blank 3, the tool-of-press-forming model is the same, the bottom dead center shape is the same, and thus comparison can be made. As illustrated in FIG. 6, the second shape 9 has an amount of difference of 5.1 mm at a left end of a flange portion and -3.6 mm at a top portion of a curved position. In a center portion in a longitudinal direction, the second shape 9 has an amount of difference of 2.7 mm at a side wall portion and 2.1 mm at the flange portion. The second shape 9 has an amount of difference of -1.6 mm at the flange portion near a right end.

### <Deviation Amount Acquisition Step>

In the deviation amount acquisition step S5, the first shape 5 and the second shape 9 are compared with each other to determine a portion where both the shapes deviate from each other and a deviation amount.

In the embodiment, amounts of difference (springback amounts) from the bottom dead center shape at respective portions of the first shape 5 and the second shape 9 are determined and compared with each other. The difference between the amounts of difference is determined as a deviation amount. That is, the deviation amount is a value obtained by subtracting the amount of difference between the second shape 9 acquired by press forming analysis using a flat blank model and the bottom dead center shape from the amount of difference between the first shape 5 generated based on the actual press formed part and the bottom dead center shape. Therefore, in a case of plus (+) of the difference (deviation amount) of the amount of difference, the portion of the first shape 5 has a more convex shape than the second shape 9. In a case of minus (-) of the difference (deviation amount) of the amount of difference, the portion of the first shape 5 has a more concave shape than the second shape 9.

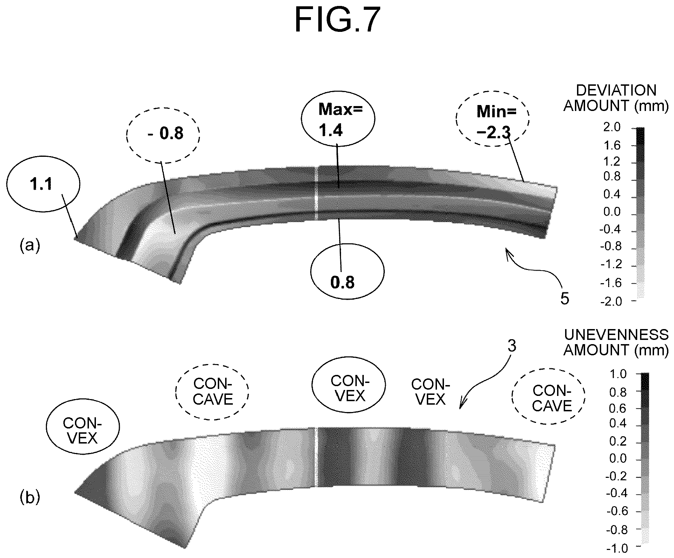

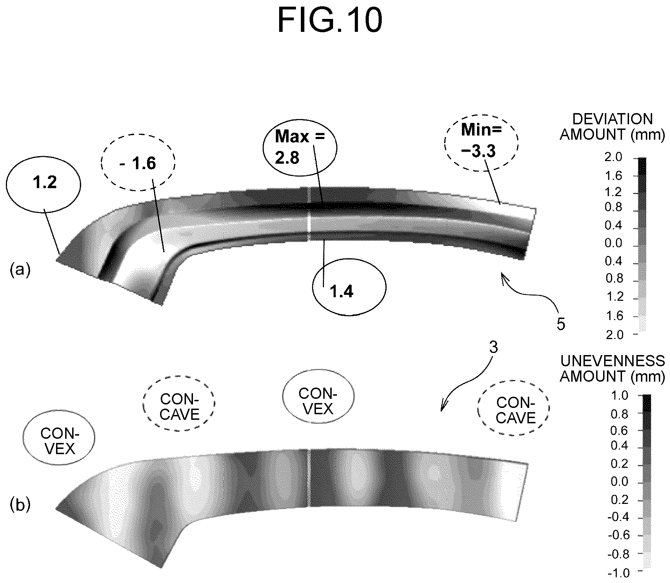

FIG. 7(a) illustrates a deviation amount determined by comparing the first shape 5 and the second shape 9 with each other. In the figure, a solid line surrounds a deviation amount of plus (+), and a broken line surrounds a deviation amount of minus (-). Furthermore, Max represents a maximum value of the deviation amount in in a convex direction, and Min represents a maximum value (minimum in numerical value) of the deviation amount in a concave direction. The same applies to FIG. 10. As illustrated in FIG. 7(a), deviation in the convex direction is maximized at the side wall portion in the center portion, and deviation in the concave direction is maximized at the flange portion near the right end. Therefore, the shape variation of the actual blank 3 has a great influence on these portions.

FIG. 7(b) is a view similar to FIG. 3(a) for confirming the correspondence between the above-described deviation amount at each portion and the uneven shape of the actual blank 3. In the embodiment, when portions of the actual blank 3 before press forming corresponding to portions having deviation amounts of plus (+) in FIG. 7(a) are confirmed, it can be seen that all the portions have convex shapes (see solid-line circle). This enables prediction that the convex shapes of the portions in the actual blank 3 have an influence on deviation of the first shape 5 in the convex direction. Similarly, when portions of the actual blank 3 before press forming corresponding to portions having deviation amounts of minus (-) in FIG. 7(a) are confirmed, it can be seen that all the portions have concave shapes (see broken-line circle). This enables prediction that the concave shapes of the portions in the actual blank 3 have an influence on deviation of the first shape 5 in the concave direction.

Comparison with the first shape 5 is preferably facilitated by preliminarily measuring the shape of the actual blank 3 before press forming, accumulating data obtained by the measurement, and displaying the data on a screen of a computer such as a personal computer (PC).

Since the shape variation of the actual blank 3 has a complex influence in accordance with the shape of a press formed part, the correspondence relation as in the embodiment does not necessarily appear between a deviation amount of the first shape 5 and the uneven shape of the actual blank 3.

According to the embodiment, it is possible to know an influence of the shape variation in a blank on the shape of the press formed part after springback, that is, a deviation amount caused by a greatly influenced portion and the shape variation. Furthermore, the quality of a blank can be predicted by determining the quality of a press formed part based on the deviation amount and a predetermined threshold. For example, when a plurality of press formed parts is overlapped and joined to be assembled into members of an automotive body, a large deviation amount of a flange portion particularly makes it difficult to join the press formed parts. Thus, a predetermined threshold is set for the deviation amount. A blank to be a press formed part having a deviation amount that exceeds the threshold is determined to have an influence of a shape variation and be unusable. The quality of the blank can thus be predicted. This enables grasp of a limit of the shape accuracy of the blank which falls within a shape accuracy required for the press formed part. Stable press forming can be performed by selecting a blank having an appropriate shape. Furthermore, when a shape defect of a press formed part occurs, a portion causing the shape defect of a blank before press forming can be identified, and countermeasures therefor can be immediately taken, which leads to improvement of productivity.

Furthermore, a portion for which countermeasures through the shape of a tool of press forming and countermeasures through a change in the shape of a press formed part are taken in a case where a blank having a shape variation is used can be identified by further including a step to identify portions requiring countermeasures (identification step). In the identification step, a portion in which a maximum value of a deviation amount exceeds a preset threshold is identified as a portion requiring countermeasures. For example, in FIG. 7, when the first shape 5 has a threshold of a deviation amount of ±1.5 mm, the maximum value of the deviation amount is required to be fall within the threshold by correcting only the right end portion of the first shape 5. Countermeasures can be taken by, for example, correcting a part of the tool of press forming of the corresponding portion.

A difference determined by subtracting the height of each portion of the second shape 9 after die release and springback after press forming in a case of a flat blank from the height of each portion of the first shape 5 in a case of an uneven blank in a press forming direction may be directly applied as a deviation amount to be determined by the difference between blank shapes. It is, however, necessary to set a fixed point common to respective press formed parts in order to compare shapes of the press formed parts caused by different blanks with each other. An approach of selecting the fixed point may cause different difference between respective portions of the press formed parts. In this regard, the deviation amount can be preferably determined based on a stable standard when amounts of difference from the bottom dead center shape are compared with each other as in the above-described embodiment. Furthermore, it is preferable to determine the deviation amount by comparing amounts of difference not from the above-described press forming bottom dead center shape but from the forming surface shape of a tool-of-press-forming model since the determination is based on a stable standard.

### [Second Embodiment]

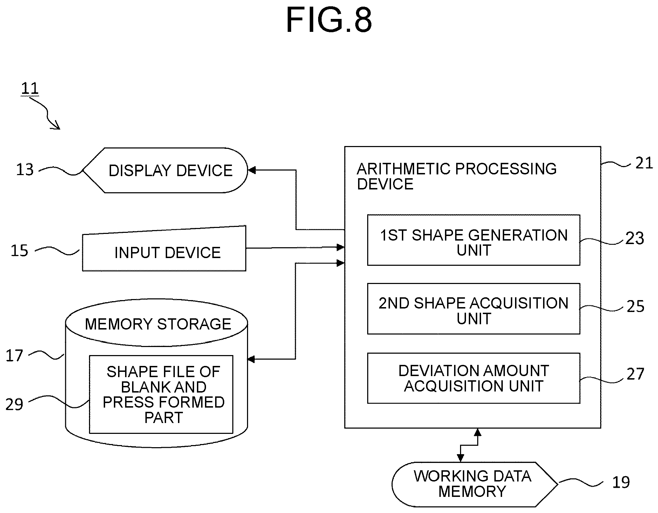

The press forming analysis method described in the first embodiment can be implemented by causing a computer to execute a preset program. A press forming analysis apparatus, which is one example of such an apparatus, will be described in a present embodiment. As illustrated in FIG. 8, a press forming analysis apparatus 11 according to the embodiment includes a computer such as a personal computer (PC). The press forming analysis apparatus 11 includes a display device 13, an input device 15, a memory storage 17, a working data memory 19, and an arithmetic processing device 21. Then, the display device 13, the input device 15, the memory storage 17, and the working data memory 19 are connected to the arithmetic processing device 21. Respective functions are executed by a command from the arithmetic processing device 21. Each configuration of the press forming analysis apparatus 11 according to the embodiment will be described below with the press formed part 1 in FIG. 2 as an analysis target.

### <<Display Device>>

The display device 13 is used for displaying an analysis result, for example. The display device 13 includes an LCD monitor.

### <<Input Device>>

The input device 15 is used for giving an instruction to display a blank, a press formed part, and the like and inputting a condition of an operator, for example. The input device 15 includes a keyboard and a mouse.

### <<Memory Storage>>

The memory storage 17 is used for storing various files such as a shape file 29 of a blank and a press formed part, for example. The memory storage 17 includes a hard disk.

### <<Working Data Memory>>

The working data memory 19 is used for temporarily storing data to be used by the arithmetic processing device 21 and performing an arithmetic operation. The working data memory 19 includes a random access memory (RAM).

### <<Arithmetic Processing Device>>

As illustrated in FIG. 8, the arithmetic processing device 21 includes a first shape generation unit 23, a second shape acquisition unit 25, and a deviation amount acquisition unit 27. The first shape generation unit 23 is a shape generation unit of actual press-formed part. The second shape acquisition unit 25 is a shape acquisition unit of press-formed part using flat blank. The arithmetic processing device 21 includes a central processing unit (CPU). Furthermore, a unit to identify portions requiring countermeasures (identification unit) may be further included. The respective units function when the CPU executes a predetermined program. The functions of the above-described respective units in the arithmetic processing device 21 will be described below.

The first shape generation unit 23 executes the first shape generation step S1 described in the first embodiment. Similarly, the second shape acquisition unit 25 executes the second shape acquisition step S3. The deviation amount acquisition unit 27 executes the deviation amount acquisition step S5. The unit to identify portions requiring countermeasures executes the identification step.

According to the press forming analysis apparatus 11 of the embodiment, as in the first embodiment, it is possible to know an influence of the shape variation in a blank on the shape of the press formed part, that is, a deviation amount caused by a greatly influenced portion and the shape variation. Furthermore, the quality of a blank can be predicted by determining the quality of a press formed part based on the deviation amount and a predetermined threshold. Moreover, a portion, for which countermeasures through the shape of a tool of press forming and countermeasures by a change in the shape of a press formed part are taken in a case where a blank having a shape variation is used, can be identified by including the unit to identify portions requiring countermeasures. The unit identifies, as a portion requiring countermeasures, a portion in which a deviation amount exceeds a preset threshold.

As described above, the first shape generation unit 23, the second shape acquisition unit 25, the deviation amount acquisition unit 27, and the unit to identify portions requiring countermeasures in the press forming analysis apparatus 11 of the embodiment are implemented by the CPU executing a predetermined program. Therefore, when the invention is configured mainly by a program, a press forming analysis program according to the present invention can be identified as causing a computer to function as the first shape generation unit, the second shape acquisition unit, the deviation amount acquisition unit, and the unit to identify portions requiring countermeasures.

### [Example]

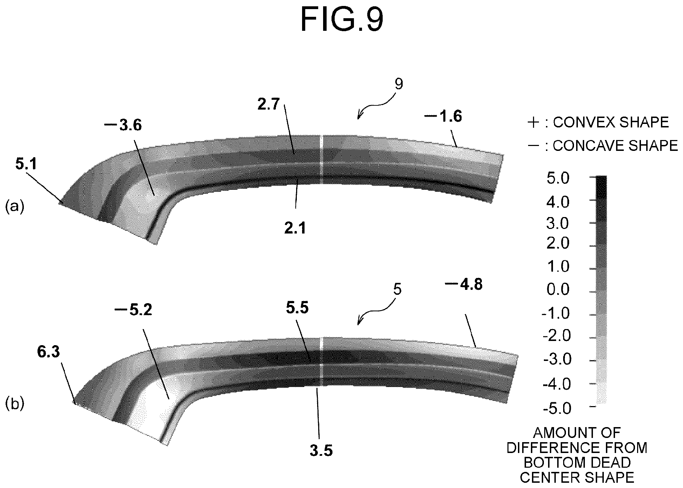

In order to confirm effects of the present invention, the press forming analysis method described in the first embodiment was performed not by deep drawing but by crash forming. Description thereof will be given with reference to FIGS. 9 and 10. Furthermore, a blank of a 1.5 GPa-class steel sheet having a sheet thickness of 1.2 mm was used. Numerical values, shade of color, a convex shape, and a concave shape in FIGS. 9 and 10 are the same as those in the above-described first embodiment.

FIG. 9 illustrates the shape of a press formed part after die release in a case where crash forming is adopted for forming of an actual press formed part and forming by CAE analysis. FIG. 9(a) illustrates the shape of the press formed part subjected to press forming analysis using the flat blank model 7 in FIG. 5. FIG. 9(b) illustrates the shape of the press formed part generated based on the actual press formed part, which has been press-formed by using a blank having an uneven shape similar to that of the actual blank 3 having an uneven shape in FIG. 3.

In a case of the second shape 9 subjected to press forming analysis using a flat blank model, as illustrated in FIG. 9(a), the second shape 9 has an amount of difference of 5.1 mm at a left end of a flange portion and -3.6 mm at a top portion of a curved position. In a center portion in a longitudinal direction, the second shape 9 has an amount of difference of 2.7 mm at a side wall portion and 2.1 mm at the flange portion. The second shape 9 has an amount of difference of -1.6 mm at the flange portion near a right end. In contrast, in a case of the first shape 5 generated based on the actual press formed part, as illustrated in FIG. 9(b), the first shape 5 has an amount of difference of 6.3 mm at the left end of the flange portion and -5.2 mm at the top portion of the curved position. In the center portion in the longitudinal direction, the first shape 5 has an amount of difference of 5.5 mm at the side wall portion and 3.5 mm at the flange portion. The first shape 5 has an amount of difference of -4.8 mm at the flange portion near the right end.

FIG. 10 illustrates a deviation amount determined by comparing the second shape 9 in FIG. 9(a) with the first shape 5 in FIG. 9(b) and the actual blank 3 having an uneven shape in association with each other. As illustrated in FIG. 10, the first shape 5 has the largest deviation amount of -3.3 mm at the right end portion. It can be seen that the concave shape of the actual blank 3 before forming corresponding to the portion has a great influence. Furthermore, the first shape 5 has a large deviation amount of 2.8 mm also at the center portion. It can be seen that the convex shape of the actual blank 3 before press forming corresponding to the portion has a great influence.

In order to join parts constituting an automotive body, here, a threshold of ±1.5 mm was provided for a deviation amount corresponding to shape accuracy, and the quality of a press formed part using an actual blank having an uneven shape was predicted. As a result, it was successfully grasped, at a glance, that the right end portion, the center portion, and the top portion of the curved position of the first shape 5 in FIG. 10 need shape correction. A press formed part having a good shape can thus be manufactured by performing press forming after correcting a tool of press forming for the portions.

### Industrial Applicability

According to the present invention, there can be provided a press forming analysis method, a press forming analysis apparatus, and a press forming analysis program for predicting an influence of a shape variation of a blank taken from a metal sheet having the shape variation in a case where press forming is performed by using the blank.

### Reference Signs List

- 1: PRESS FORMED PART (TARGET SHAPE)
- 3: ACTUAL BLANK
- 5: first SHAPE
- 7: FLAT BLANK MODEL
- 9: second SHAPE
- 11: PRESS FORMING ANALYSIS APPARATUS
- 13: DISPLAY DEVICE
- 15: INPUT DEVICE
- 17: MEMORY STORAGE
- 19: WORKING DATA MEMORY
- 21: ARITHMETIC PROCESSING DEVICE
- 23: first SHAPE GENERATION UNIT
- 25: second SHAPE ACQUISITION UNIT
- 27: DEVIATION AMOUNT ACQUISITION UNIT
- 29: SHAPE FILE OF BLANK AND PRESS FORMED PART

## Claims

1. A computer implemented press forming analysis method for predicting an influence of a shape variation of a blank taken from a metal sheet having the shape variation in a case where press forming is performed by using the blank, comprising:
a first shape generation step (S1) of generating a first shape having a same shape as an actual press formed part based on measurement data obtained by measuring a shape after die release of the actual press formed part, the actual press formed part being press-formed with a predetermined tool of press forming by using an actual blank taken from the metal sheet having the shape variation;
a second shape acquisition step (S3) of acquiring a shape of a press formed part after die release as a second shape by performing press forming analysis in a case where press forming is performed with a tool-of-press-forming model having a same shape as the predetermined tool of press forming by using a flat blank model having a flat shape; and
a deviation amount acquisition step (S5) of determining a portion where both the shapes deviate from each other and a deviation amount by comparing the second shape and the first shape with each other.

2. The press forming analysis method according to claim 1,
wherein, in the deviation amount acquisition step, a bottom dead center shape in press forming analysis using the flat blank model is determined as a standard, and a difference between a difference from the first shape corresponding to a predetermined position of the bottom dead center shape and a difference from the second shape corresponding to the predetermined position of the bottom dead center shape is acquired as the deviation amount.

3. The press forming analysis method according to claim 1,
wherein, in the deviation amount acquisition step, a forming surface shape of the tool-of-press-forming model is determined as a standard, and a difference between a difference from the first shape corresponding to a predetermined position of the forming surface shape and a difference from the second shape corresponding to the predetermined position of the forming surface shape is acquired as the deviation amount.

4. The press forming analysis method according to any one of claims 1 to 3, further comprising an identification step of identifying a portion where the deviation amount exceeds a preset threshold as a portion requiring a countermeasure.

5. A press forming analysis apparatus (11) for predicting an influence of a shape variation of a blank taken from a metal sheet having the shape variation in a case where press forming is performed by using the blank, comprising:
a first shape generation unit (23) configured to generate a first shape having a same shape as an actual press formed part based on measurement data obtained by measuring a shape after die release of the actual press formed part, which has been press-formed with a predetermined tool of press forming by using an actual blank taken from the metal sheet having the shape variation;
a second shape acquisition unit (25) configured to acquire a shape of a press formed part after die release as a second shape by performing press forming analysis in a case where press forming is performed with a tool-of-press-forming model having a same shape as the predetermined tool of press forming by using a flat blank model having a flat shape; and
a deviation amount acquisition unit (27) configured tc determine a portion where both the shapes deviate from each other and a deviation amount by comparing the second shape and the first shape with each other.

6. The press forming analysis apparatus according to claim 5, wherein the deviation amount acquisition unit is configured to
determine a bottom dead center shape in press forming analysis using the flat blank model as a standard, and
acquire, as the deviation amount, a difference between a difference from the first shape corresponding to a predetermined position of the bottom dead center shape and a difference from the second shape corresponding to the predetermined position of the bottom dead center shape.

7. The press forming analysis apparatus according to claim 5, wherein the deviation amount acquisition unit is configured to
determine a forming surface shape of the tool-of-press-forming model as a standard, and
acquire, as the deviation amount, a difference between a difference from the first shape corresponding to a predetermined position of the forming surface shape and a difference from the second shape corresponding to the predetermined position of the forming surface shape.

8. The press forming analysis apparatus according to any one of claims 5 to 7, further comprising an identification unit configured to identify a portion where the deviation amount exceeds a preset threshold as a portion requiring a countermeasure.

9. A press forming analysis program causing a computer to function as the press forming analysis apparatus according to any one of claims 5 to 8.

## Patentansprüche

1. Computerimplementiertes Pressformungsanalyseverfahren zum Vorhersagen eines Einflusses einer Formvariation einer Blechplatine, die aus einem Metallblech entnommen ist, das die Formvariation aufweist, in einem Fall, in dem Pressformung unter Verwendung der Blechplatine durchgeführt wird, umfassend:
einen ersten Formerzeugungsschritt (S1) zum Erzeugen einer ersten Form, die eine gleiche Form wie ein tatsächliches Pressformteil aufweist, basierend auf Messdaten, die durch Vermessen einer Form nach dem Entformen des tatsächlichen Pressformteils erhalten werden, wobei das tatsächliche Pressformteil mit einem vorgegebenen Pressformwerkzeug unter Verwendung einer tatsächlichen Blechplatine, die aus dem Metallblech entnommen ist, das die Formvariation aufweist, pressgeformt wird;
einen zweiten Formerfassungsschritt (S3) zum Erfassen einer Form eines Pressformteils nach dem Entformen als eine zweite Form durch Durchführen einer Pressformungsanalyse in einem Fall, in dem Pressformung mit einem Pressformwerkzeugmodell, das eine gleiche Form wie das vorgegebene Pressformwerkzeug aufweist, unter Verwendung eines flachen Blechplatinenmodells, das eine flache Form aufweist, durchgeführt wird; und
einen Abweichungsbetragerfassungsschritt (S5) zum Bestimmen eines Abschnitts, in dem beide Formen voneinander abweichen, und eines Abweichungsbetrags durch Vergleichen der zweiten Form und der ersten Form miteinander.

2. Pressformungsanalyseverfahren nach Anspruch 1,
wobei im Abweichungsbetragerfassungsschritt eine Form im unteren Totpunkt in einer Pressformungsanalyse unter Verwendung des flachen Blechplatinenmodells als Standard bestimmt wird, und eine Differenz zwischen einer Differenz von der ersten Form, die einer vorgegebenen Position der Form im unteren Totpunkt entspricht, und einer Differenz von der zweiten Form, die der vorgegebenen Position der Form im unteren Totpunkt entspricht, als der Abweichungsbetrag erfasst wird.

3. Pressformungsanalyseverfahren nach Anspruch 1,
wobei im Abweichungsbetragerfassungsschritt eine Form der Formfläche des Pressformwerkzeugmodells als Standard bestimmt wird, und eine Differenz zwischen einer Differenz von der ersten Form, die einer vorgegebenen Position der Form der Formfläche entspricht, und einer Differenz von der zweiten Form, die der vorgegebenen Position der Form der Formfläche entspricht, als der Abweichungsbetrag erfasst wird.

4. Pressformungsanalyseverfahren nach einem der Ansprüche 1 bis 3, das weiter einen Identifizierungsschritt zum Identifizieren eines Abschnitts, in dem der Abweichungsbetrag einen vorgegebenen Schwellenwert überschreitet, als eines Abschnitts, der eine Gegenmaßnahme erfordert, umfasst.

5. Pressformungsanalysevorrichtung (11) zum Vorhersagen eines Einflusses einer Formvariation einer Blechplatine, die aus einem Metallblech entnommen ist, das die Formvariation aufweist, in einem Fall, in dem Pressformung unter Verwendung der Blechplatine durchgeführt wird, umfassend:
eine erste Formerzeugungseinheit (23), die ausgebildet ist, eine erste Form, die eine gleiche Form wie ein tatsächliches Pressformteil aufweist, basierend auf Messdaten zu erzeugen, die durch Vermessen einer Form nach dem Entformen des tatsächlichen Pressformteils erhalten werden, welches mit einem vorgegebenen Pressformwerkzeug unter Verwendung einer tatsächlichen Blechplatine, die aus dem Metallblech entnommen ist, das die Formvariation aufweist, pressgeformt worden ist;
eine zweite Formerfassungseinheit (25), die ausgebildet ist, eine Form eines Pressformteils nach dem Entformen als eine zweite Form durch Durchführen einer Pressformungsanalyse in einem Fall zu erfassen, in dem Pressformung mit einem Pressformwerkzeugmodell, das eine gleiche Form wie das vorgegebene Pressformwerkzeug aufweist, unter Verwendung eines flachen Blechplatinenmodells, das eine flache Form aufweist, durchgeführt wird; und
eine Abweichungsbetragerfassungseinheit (27), die ausgebildet ist, einen Abschnitt, in dem beide Formen voneinander abweichen, und einen Abweichungsbetrag durch Vergleichen der zweiten Form und der ersten Form miteinander zu bestimmen.

6. Pressformungsanalysevorrichtung nach Anspruch 5, wobei die Abweichungsbetragerfassungseinheit ausgebildet ist,
eine Form im unteren Totpunkt in einer Pressformungsanalyse unter Verwendung des flachen Blechplatinenmodells als Standard zu bestimmen, und
als den Abweichungsbetrag eine Differenz zwischen einer Differenz von der ersten Form, die einer vorgegebenen Position der Form im unteren Totpunkt entspricht, und einer Differenz von der zweiten Form, die der vorgegebenen Position der Form im unteren Totpunkt entspricht, zu erfassen.

7. Pressformungsanalysevorrichtung nach Anspruch 5, wobei die Abweichungsbetragerfassungseinheit ausgebildet ist,
eine Form der Formfläche des Pressformwerkzeugmodells als Standard zu bestimmen, und
als den Abweichungsbetrag eine Differenz zwischen einer Differenz von der ersten Form, die einer vorgegebenen Position der Form der Formfläche entspricht, und einer Differenz von der zweiten Form, die der vorgegebenen Position der Form der Formfläche entspricht, zu erfassen.

8. Pressformungsanalysevorrichtung nach einem der Ansprüche 5 bis 7, die weiter eine Identifizierungseinheit umfasst, die ausgebildet ist, einen Abschnitt, in dem der Abweichungsbetrag einen vorgegebenen Schwellenwert überschreitet, als einen Abschnitt zu identifizieren, der eine Gegenmaßnahme erfordert.

9. Pressformungsanalyseprogramm, das einen Computer dazu veranlasst, als die Pressformungsanalysevorrichtung nach einem der Ansprüche 5 bis 8 zu fungieren.

## Revendications

1. Procédé d'analyse du formage à la presse mis en œuvre par ordinateur pour prédire une influence d'une variation de forme d'une ébauche prélevée d'une feuille de métal présentant la variation de forme dans un cas où le formage à la presse est réalisé en utilisant l'ébauche, comprenant :
une étape de génération de première forme (S1) consistant à générer une première forme présentant une même forme qu'une pièce formée à la presse réelle sur la base de données de mesure obtenues en mesurant une forme après libération de la matrice de la pièce formée à la presse réelle, la pièce formée à la presse réelle étant formée à la presse avec un outil prédéterminé de formage à la presse en utilisant une ébauche réelle prélevée de la feuille de métal présentant la variation de forme ;
une étape d'acquisition de deuxième forme (S3) consistant à acquérir une forme d'une pièce formée à la presse après libération de la matrice en tant qu'une deuxième forme en réalisant une analyse du formage à la presse dans un cas où le formage à la presse est réalisé avec un modèle d'outil de formage à la presse présentant une même forme que l'outil prédéterminé de formage à la presse en utilisant un modèle d'ébauche plate présentant une forme plate ; et
une étape d'acquisition de quantité d'écart (S5) consistant à déterminer une partie où les deux formes s'écartent l'une de l'autre et une quantité d'écart en comparant la deuxième forme et la première forme l'une à l'autre.

2. Procédé d'analyse du formage à la presse selon la revendication 1,
dans lequel, dans l'étape d'acquisition de quantité d'écart, une forme de point mort bas dans l'analyse du formage à la presse en utilisant le modèle d'ébauche plate est déterminée en tant qu'une référence, et une différence entre une différence par rapport à la première forme correspondant à une position prédéterminée de la forme de point mort bas et une différence par rapport à la deuxième forme correspondant à la position prédéterminée de la forme de point mort bas est acquise en tant que la quantité d'écart.

3. Procédé d'analyse du formage à la presse selon la revendication 1,
dans lequel, dans l'étape d'acquisition de quantité d'écart, une forme de surface de formage du modèle d'outil de formage à la presse est déterminée en tant qu'une référence, et une différence entre une différence par rapport à la première forme correspondant à une position prédéterminée de la forme de surface de formage et une différence par rapport à la deuxième forme correspondant à la position prédéterminée de la forme de surface de formage est acquise en tant que la quantité d'écart.

4. Procédé d'analyse du formage à la presse selon l'une quelconque des revendications 1 à 3, comprenant en outre une étape d'identification consistant à identifier une partie où la quantité d'écart dépasse un seuil prédéfini en tant qu'une partie nécessitant une contre-mesure.

5. Appareil d'analyse du formage à la presse (11) pour prédire une influence d'une variation de forme d'une ébauche prélevée d'une feuille de métal présentant la variation de forme dans un cas où le formage à la presse est réalisé en utilisant l'ébauche, comprenant :
une unité de génération de première forme (23) configurée pour générer une première forme présentant une même forme qu'une pièce formée à la presse réelle sur la base de données de mesure obtenues en mesurant une forme après libération de la matrice de la pièce formée à la presse réelle, qui a été formée à la presse avec un outil prédéterminé de formage à la presse en utilisant une ébauche réelle prélevée de la feuille de métal présentant la variation de forme ;
une unité d'acquisition de deuxième forme (25) configurée pour acquérir une forme d'une pièce formée à la presse après libération de la matrice en tant qu'une deuxième forme en réalisant une analyse du formage à la presse dans un cas où le formage à la presse est réalisé avec un modèle d'outil de formage à la presse présentant une même forme que l'outil prédéterminé de formage à la presse en utilisant un modèle d'ébauche plate présentant une forme plate ; et
une unité d'acquisition de quantité d'écart (27) configurée pour déterminer une partie où les deux formes s'écartent l'une de l'autre et une quantité d'écart en comparant la deuxième forme et la première forme l'une à l'autre.

6. Appareil d'analyse du formage à la presse selon la revendication 5, dans lequel l'unité d'acquisition de quantité d'écart est configurée pour
déterminer une forme de point mort bas dans l'analyse du formage à la presse en utilisant le modèle d'ébauche plate en tant qu'une référence, et
acquérir, en tant que la quantité d'écart, une différence entre une différence par rapport à la première forme correspondant à une position prédéterminée de la forme de point mort bas et une différence par rapport à la deuxième forme correspondant à la position prédéterminée de la forme de point mort bas.

7. Appareil d'analyse du formage à la presse selon la revendication 5, dans lequel l'unité d'acquisition de quantité d'écart est configurée pour
déterminer une forme de surface de formage du modèle d'outil de formage à la presse en tant qu'une référence, et
acquérir, en tant que la quantité d'écart, une différence entre une différence par rapport à la première forme correspondant à une position prédéterminée de la forme de surface de formage et une différence par rapport à la deuxième forme correspondant à la position prédéterminée de la forme de surface de formage.

8. Appareil d'analyse du formage à la presse selon l'une quelconque des revendications 5 à 7, comprenant en outre une unité d'identification configurée pour identifier une partie où la quantité d'écart dépasse un seuil prédéfini en tant qu'une partie nécessitant une contre-mesure.

9. Programme d'analyse du formage à la presse amenant un ordinateur à fonctionner en tant que l'appareil d'analyse du formage à la presse selon l'une quelconque des revendications 5 à 8.
